# EUROPEAN PATENT SPECIFICATION

(11) **EP 2 243 641 B1**
(45) Date of publication and mention of the grant of the patent: **25.01.2012**
(21) Application number: 10004279.5
(22) Date of filing: 22.04.2010
(51) Int. Cl.: B60C 25/00

(54) **Heating device for tyre beads**
Heizgerät für Reifenwülste
Chauffage pour bourrelets de pneus

(30) Priority: 24.04.2009 IT MO20090099
(43) Date of publication of application: 27.10.2010
(73) Proprietor: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Bergamini, Silvio

(56) References cited:
- DE-A1- 19 837 680
- DE-U1-202005 011 627
- GB-A- 2 277 061
- US-A- 1 515 421

## Description

### Field of the invention

The present invention relates to a heating device, in particular for heating tyre beads.

### Background art

Devices for heating vehicle tyres, or parts thereof have been long known.

Heating of tyres, and particularly of their beads, is required with the tyres are designed to be used in cold weather regions.

Low temperatures affect the flexibility of tyres, and particularly of their beads.

Furthermore, certain types of tyres, particularly special low-profile tyres designed for use with high-performance vehicles, are characterized by high bead rigidity which, when combined with the effect of low temperatures thereon, prevent easy mounting of tyres to their rims.

Furthermore, damages to the inner fabric of tyre sidewalls may be caused by forcing excessively rigid tyres.

If entire tyres are required to be heated, prior art heating devices include flexible covers, known as thermal covers, that are laid upon the tyres when they are already mounted to their rims, to wrap them completely and are closed thereon.

Thermal covers have electrical resistors therein, which receive power from a power generating set, or a power source of industrial or domestic mains and as they are heated, they transfer heat by contact to the tyres, thereby increasing their flexibility.

Another prior art device that is used for heating tyre beads consists in a heating ring that, like the above described thermal covers, is equipped with electrical resistors that are heated when they are supplied with power and are laid onto the tyre beads, which are heated, also in this case, by contact with the ring surface.

A further tyre heating device according to the preamble of claim 1 is known from the prior art document US 1,515,421.

According to this document, a tyre to be heated is known to be fitted on a cylindrical support that is surrounded by a number of mutually connected adjustable burners, arranged around the cylindrical support, which has a flared top surface, for deflecting heat around the tyre so that it can impinge on it and cause it to expand or shrink for easier mounting to a vehicle wheel.

Another tyre heating device is known from the prior art document DE 1 983 7680.

According to this document, the beads or a tyre are heated by a heating element comprising two half-portions of half-circular section, that are adapted to be moved toward or away from each other, to occupy the central opening of the tyre and abut against the beads that form their inner perimeter.

This solution does not provide a single continuous heating device and the bead areas located at the points in which the half-portions are separated cannot be heated, whereby these areas are less deformable than heated areas, which will generate abnormal stresses as the tyres are mounted to the rims of vehicle wheels.

A further tyre bead heating device is known from the prior art document GB 2 277 061, which discloses a tyre repairing device comprising a pressure pad and a heat pad for heating the bead to be repaired, which pads can be inserted between the tyre and the rim of a wheel, in the area thereof in which the bead needs repair.

Another tyre heating device is known from the prior art document DE 202005 011 627.

This document discloses a heating system for heating the running surfaces of tyres, particularly motor vehicle tyres, which comprises ringshaped piezoelectric elements, that are designed to heat the running surface.

These prior art devices suffer from certain drawbacks.

A first drawback is that thermal covers are used to mainly heat the outer surface of tyres, i.e. the running surface in contact with the road, whereas the beads are substantially unaffected by the heating action, because they are already mounted to the rims.

Another drawback of the prior art is that the heating rings that are to be laid in contact with the beads must have the same size as the tyres.

Therefore, many heating rings have to be provided, each having a different diameter, and being adapted to be used as a heating ring on a wheel having a corresponding diameter.

Therefore, operators are required to buy all the rings of a suitable range of tyre diameters, which will cause a considerable cost increase.

Another drawback is that prior art devices can be only used to heat tyres, and hence the emitted heat is mainly used thereby, whereas the residual heat caused by thermal inertia is totally lost.

### Disclosure of the invention

One object of the invention is to improve the state of the art.

Another object of the invention is to provide a heating device, particularly for heating tyre beads, that can fit any tyre diameter.

Yet another object of the invention is to provide a heating device, particularly for heating tyre beads, that can be also used as a general radiation heating device when it is not used for tyres, or even at the same time as it is used for tyres.

In one aspect of the invention it is provided a heating device, particularly for heating beads of tyres as defined in claim 1.

Therefore, the invention allows heating of tyre beads of different diameters.

Furthermore, the device may also operate as a normal ambient heating device.

### Brief description of the drawings

Further features and advantages of the invention will be more apparent from the detailed description of some preferred, non-exclusive embodiments of a heating device, particularly for heating tyre beads, according to the present invention, which are described as non-limiting examples with the help of the annexed drawings, in which:
FIG. 1 is a lateral schematic transparent view of a first embodiment of a heating device, particularly for heating tyre beads;
FIG. 2 is a lateral schematic transparent view of a second embodiment of a heating device, particularly for heating tyre beads;
FIG. 3 is a very schematic, very small scale view of a possible use of a combination of two heating devices of the invention, which are mounted to a support frame for simultaneously heating the beads of both sidewalls of a tyre;
FIG. 4 is a very schematic, very small scale view of a further possible use of the two heating devices of Fig. 3, which are employed for simultaneously heating the beads of opposite sidewalls of two contiguous tyres, in this case, in superposed relation;
FIG. 5 is a schematic enlarged view of a first embodiment of a heating device of the invention;
FIG. 6 is an enlarged broken away view of a detail of the area of the heating device of Fig. 5 in contact with a tyre bead.

### Detailed description of a preferred embodiment

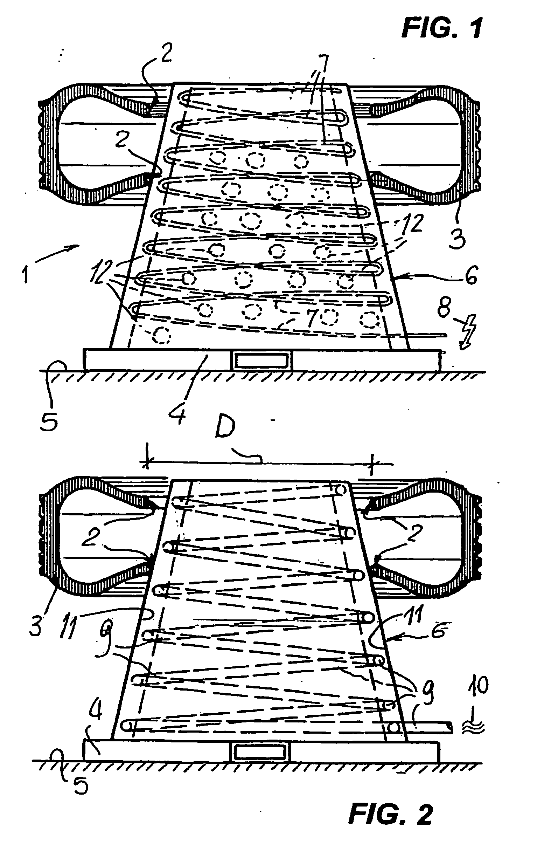

Referring to Fig. 1, numeral 1 designates a heating device, particularly for heating beads 2 of tyres 3.

The heating device 1 comprises a base 4 designed to lie on a surface 5, typically on the ground, and a heating surface 6 extending upwards from the base 5, and having a flared, preferably frusto-conical shape.

As shown in Fig. 1, as well as in Fig. 2, the heating surface 6 is designed to be introduced into the central opening of the tyre 3, that is peripherally delimited by the beads 2; thus, the heating surface 6 can be automatically adapted to various tyre diameters "D", with the lower bead 2 being held in contact with the heating surface 6 by the weight of the tyre 3 itself.

In the first embodiment as shown in Fig. 1, the heating surface 6 has a number of electrical resistors 7, which are preferably mounted in contact with an inner face of the heating surface 6, and may be actuated by supplying them with power from a power source, generally indicated by numeral 8, which may be a self-standing power generating set or domestic or industrial power mains.

In the second embodiment, as shown in Fig. 2, the heating device is substantially identical to that of the first embodiment of Fig. 1, and only differs therefrom in that the electrical resistors 7 have been replaced by a pipe coil 9 with a heated fluid circulated therein, from a source generally designated by numeral 10.

The pipe coil 9 (or the set of resistors 7, as the skilled person may appreciate), may be received in a cavity 11 formed on the inner face of the heating surface 6.

Furthermore, the skilled person will also understand that the heated fluid may be directly circulated in the cavity 11, as long as the latter is hermetically sealed.

If required, the heating surface 6 may have heat diffusion openings, designated by numeral 12 in Fig. 1.

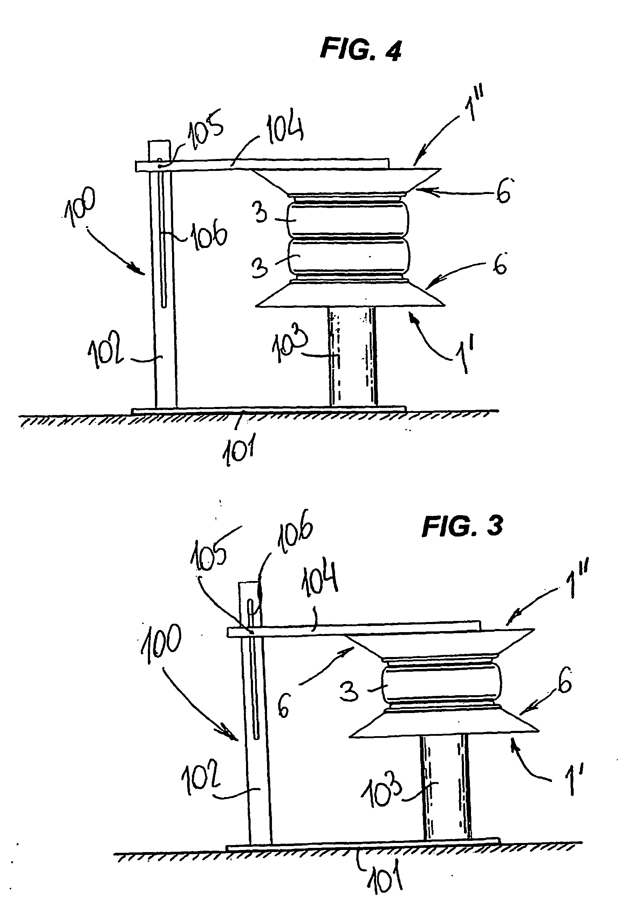

Referring to Fig. 3, two devices 1 may be fitted on a frame 100, the latter comprising a base 101 with a post 102 extending therefrom, which in this case is perpendicular to the base 101.

A support 103 also extends from the base 101 for supporting one of the heating devices 1, more particularly designated by numeral 1', with the flared side of the heating surface 6 facing upwards.

Fig. 3 also shows that the post 102 supports an overhanging arm 104 that is able to slide along the post and be locked in a known manner at a desired height.

In practice, the arm 104 is substantially horizontal and has one end facing toward the post 102 with a pin 105 slideably received and guided in a longitudinal slot 106, whereas the opposite end of the arm 104 supports another heating device 1, designated by numeral 1", with the flared side of the heating surface 6 facing opposite to that of the heating device 1'.

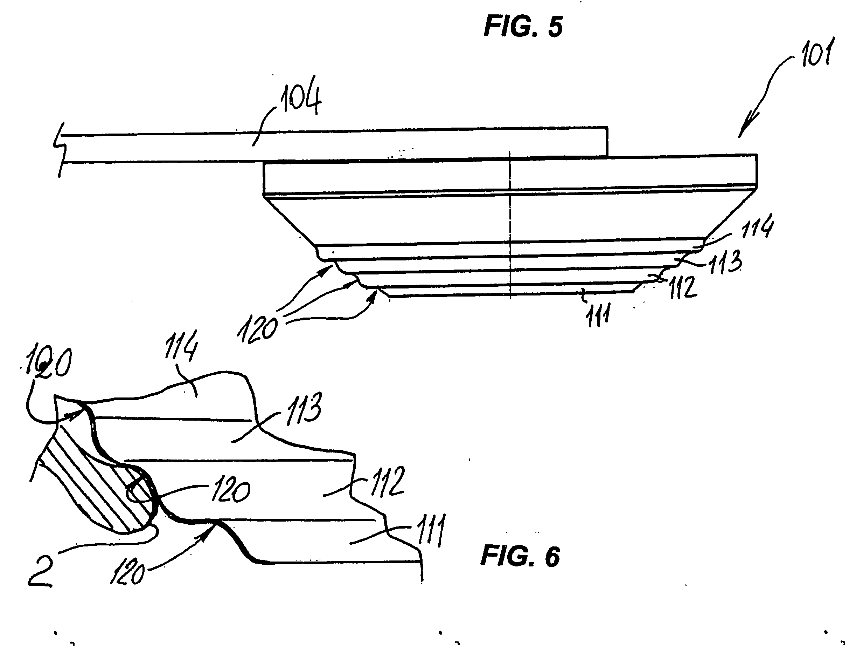

Referring now to Figure 5, the heating device of the invention, here designated by numeral 101, is still shown to have a generally frusto-conical shape; nevertheless, the surface in contact with the beads 2 of the tyres 3 to be heated has a series of circular sections 111, 112, 113, 114 of different diameters, progressively decreasing from the section 114 to the section 111, and predetermined to fit the inside diameters of tyres 3 of different sizes.

It should be noted, referring to Fig. 6, that the connecting profiles between adjacent sections, designated by numeral 120, can reproduce the corresponding contact profiles of the beads 2 of the tyres 3, to rest thereupon over a larger surface, and thus increase the mutual contact surface, for general improvement of the heating capacity.

The operation of the heating device 1 is described below with reference to the first embodiment of Fig. 1 and is as follows: an operator takes a tyre 3 and fits it on the heating surface 6 of the heating device 1.

The flared shape of the heating surface 6 allows it to automatically fit the diameter of the tyre 3 whereby the bead 2 thereof that faces toward the base 4 contacts the heating surface 6 whereas the other bead is spaced therefrom.

In the embodiment as shown in Fig. 5, the series of sections 111, 112, 113, 114 also allows automatic adaptation to the inside diameter of a bead 2 of a tyre 3, but it also increases the mutual contact surface.

The operator starts power supply to the electrical resistors 7 which are thus heated and transfer heat to the heating surface 6, the latter heating in turn the bead 2 of the tyre 3 in contact therewith.

One of the beads 2 of one sidewall of the tyre 3 needs only be heated, for such heated bead to be elastically deformed by the operator and caused to pass over the edge of a rim to which it has to be mounted.

Nevertheless, if particularly cold weather should require so, both beads 2 may be successively heated, by removing the tyre 3 from the heating surface 6 and fitting it again thereon with the opposite sidewall.

It will be appreciated that, even when the heating device 1 is not used to heat the beads 2, it can be used as a conventional radiation heating device.

The operation of the second embodiment of the heating device 1 is identical to that of the first embodiment.

When two devices 1' and 1" are simultaneously used, either one of two modes of heating the beads 2 of the tyres 3 may be selected, which namely consist in heating both beads 2 of a single tyre 3 simultaneously, by sandwiching the latter between the two heating devices 1 and 1 ", as shown in Fig. 3, or heating the beads 2 of opposite side walls of two tyres 3 mounted to the support 103 in superposed relation.

In order to place the beads 2 in contact with both heating devices 1' and 1 ", the arm 104 may be displaced by sliding it along the post 102 in the guide slot 106 and locking it in the desired position.

However, the skilled person will recognize that the arm 104 may be fixed on the post 102, while the support 103 may be moved up and down as needed, e.g. with the support 103 having a telescopic body driven by a fluid-dynamic actuator.

The invention was found to fulfill the intended objects.

The invention is susceptible to a number of changes and variants
, all the details may be replaced by other technically equivalent parts, and
any sizes and materials may be used as needed, without departure from the scope of the following claims.

## Claims

1. Heating device (1), particularly for heating beads (2) of tyres (3) having different diameters, comprising heating means which can be fitted in contact with said beads (2), said heating means comprising an heating surface (6) having a shape so configured as to couple with said different diameters of said beads (2), **characterized in that** said shape of said heating surface comprises a flared shape, intended for being fitted in the inside of the centred opening of tyres (3) so to fit by itself in direct contact with said beads (2).

2. Heating device according to claim 1, wherein said flared shape comprises a frustum of cone shape.

3. Heating device according to claim 2, wherein said flared shape comprises a plurality of sections (111, 112, 113, 114) having progressively reducing diameters and reciprocally connected by connecting profiles copying substantially the profiles of beads (2) of tyres (3).

4. Heating device according to claim 1, wherein said heating surface (6) comprises a cavity (11) intended for receiving an heating element.

5. Heating device according to claim 4, wherein said heating element comprises electric resistance means (7) associated with a face of said heating surface (6).

6. Heating device according to claim 4, wherein said heating element comprises an heated fluid.

7. Heating device according to claim 5, wherein said face comprises a inner face.

8. Heating device according to anyone of claims from 1 to 6, wherein said heating surface (6) comprises heat-diffusion openings (12).

9. Heating device according to anyone of claims from 1 to 7, wherein said heating means (6, 7) are thermo-regulated by temperature thermoregulation means.

## Patentansprüche

1. Heizvorrichtung (1), insbesondere für Heizborde (2) von Reifen (3) mit unterschiedlichen Durchmessern, wobei Heizeinrichtungen vorgesehen sind, die in Anlage mit den Borden (2) gebracht werden können, wobei diese Heizeinrichtungen eine Heizoberfläche (6) aufweisen mit einer Form, die so ausgestaltet ist, dass sie sich den unterschiedlichen Durchmessern der Borde (2) anpasst, **dadurch gekennzeichnet, dass** die Form der Heizoberfläche gebördelt ist mit dem Ziel, dem Inneren der zentralen Öffnung der Reifen (3) angepasst zu sein, um so in unmittelbarer Anlage sich an die Borde (2) anzupassen.

2. Heizvorrichtung gemäß Anspruch 1, **dadurch gekennzeichnet, dass** die aufgebördelte Form einen Kegel mit konischer Form aufweist.

3. Heizvorrichtung gemäß Anspruch 2, **dadurch gekennzeichnet, dass** die gebördelte Form eine Vielzahl von Abschnitten (111, 112, 113, 114) mit fortschreitend abnehmenden Durchmessern aufweist und reziprok mittels verbindenden Profilen verbunden ist, die im wesentlichen die Profile der Borde (2) der Reifen (3) kopieren.

4. Heizvorrichtung gemäß Anspruch 1, **dadurch gekennzeichnet, dass** die Heizoberfläche (6) eine Öffnung (11) aufweist zur Aufnahme eines Heizelements.

5. Heizvorrichtung gemäß Anspruch 4, **dadurch gekennzeichnet, dass** das Heizelement elektrische Widerstände (7) aufweist, die einer Seite der Heizoberfläche (6) zugeordnet sind.

6. Heizvorrichtung gemäß Anspruch 4, **dadurch gekennzeichnet, dass** das Heizelement eine erhitzte Flüssigkeit enthält

7. Heizvorrichtung gemäß Anspruch 5, **dadurch gekennzeichnet, dass** die Seite eine innere Seite aufweist.

8. Heizvorrichtung gemäß Anspruch 1 bis 6,**dadurch gekennzeichnet, dass** die Heizoberfläche (6) mit Wärmediffusionsöffnungen (12) versehen ist.

9. Heizvorrichtung gemäß einem der Ansprüche 1 bis 7, **dadurch gekennzeichnet,dass** die Heizeinrichtungen (6,7) wärmereguliert sind mittels Temperaturwärmereglereinrichtungen.

## Revendications

1. Dispositif de chauffage (1), en particulier pour le chauffage des talons (2) de pneumatiques (3) ayant différents diamètres, comprenant des moyens chauffants qui peuvent être mis en contact avec lesdits talons (2), lesdits moyens chauffants comprenant une surface chauffante (6) ayant une forme configurée de manière à s'accoupler auxdits différents diamètres desdits talons (2), **caractérisé en ce que** ladite forme de ladite surface chauffante comprend une forme évasée, destinée à être ajustée dans l'ouverture centrée de pneumatiques (3) de manière à s'ajuster d'elle-même en contact direct avec lesdites talons (2).

2. Dispositif de chauffage selon la revendication 1, dans lequel ladite forme évasée comprend une forme de tronc de cône.

3. Dispositif de chauffage selon la revendication 2, dans lequel ladite forme évasée comprend une pluralité de sections (111, 112, 113, 114) ayant des diamètres progressivement décroissants et qui sont raccordées entre elles par des profils de raccordement qui reproduisent sensiblement les profils de talons (2) de pneumatiques (3).

4. Dispositif de chauffage selon la revendication 1, dans lequel ladite surface chauffante (6) comporte une cavité (11) prévue pour recevoir un élément chauffant.

5. Dispositif de chauffage selon la revendication 4, dans lequel ledit élément chauffant comprend des moyens constituant des résistances électriques (7) associés à une face de ladite surface chauffante (6).

6. Dispositif de chauffage selon la revendication 4, dans lequel ledit élément chauffant comprend un fluide chauffé.

7. Dispositif de chauffage selon la revendication 5, dans lequel ladite face comprend une face intérieure.

8. Dispositif de chauffage selon une quelconque des revendications 1 à 6, dans lequel ladite surface chauffante (6) présente des ouvertures de diffusion de la chaleur (12).

9. Dispositif de chauffage selon une quelconque des revendications 1 à 7, dans lequel lesdits moyens chauffants (6, 7) sont thermo-régulés par des moyens de thermo-régulation de la température.
